# FASCICULE DE BREVET EUROPEEN

(11) **EP 2 448 810 B1**
(45) Date de publication et mention de la délivrance du brevet: **01.05.2013**
(21) Numéro de dépôt: 10726979.7
(22) Date de dépôt: 29.06.2010
(51) Int. Cl.: B62D 57/032

(54) **PROCEDE POUR CONTRÔLER LA MARCHE D'UN ROBOT MOBILE ET ROBOT METTANT EN OEUVRE LE PROCEDE**
VERFAHREN ZUR STEUERUNG DER GEHBEWEGUNG EINES BEWEGLICHEN ROBOTERS UND ROBOTER MIT DIESEM VERFAHREN
METHOD FOR CONTROLLING THE WALKING MOTION OF A MOVABLE ROBOT, AND ROBOT IMPLEMENTING SAID METHOD

(30) Priorité: 30.06.2009 FR 0954452
(43) Date de publication de la demande: 09.05.2012
(73) Titulaire: Aldebaran Robotics S.A., 75014 Paris (FR)
(72) Inventeur: MAISONNIER, Bruno, F-75006 Paris (FR); LAFOURCADE, Pascal, F-78000 Versailles (FR); BERTHOZ, Alain, F-75006 Paris (FR)
(74) Mandataire: Nguyen Van Yen, Christian
(86) Numéro de dépôt international: PCT/EP2010/059211
(87) Numéro de publication internationale: WO 2011/000832

(56) Documents cités:
- KUO A D ET AL: "Energetic Consequences of Walking Like an Inverted Pendulum: Step-to-Step Transitions" INTERNET CITATION 21 avril 2005 (2005-04-21), XP002576375 ISSN: 0091-6331 Extrait de l'Internet: URL:http://www-personal.umich.edu/~artkuo/ Papers/ESSR05.pdf [extrait le 2010-07-23]
- COLLINS S ET AL: "Efficient bipedal robots based on passive-dynamic walkers" SCIENCE AMERICAN ASSOC. ADV. SCI USA LNKD- DOI:10.1126/SCIENCE.1107799, vol. 307, no. 5712, 18 février 2005 (2005-02-18), pages 1082-1085, XP002576376 ISSN: 0036-8075
- VICTOR NUNEZ: "Etude de la commande des movements dynamiques d'un robot humanoïde" INTERNET CITATION 10 janvier 2009 (2009-01-10), XP002576377 Extrait de l'Internet: URL:http://www.naoforge.fr/Documents/Bibli o_Nunez_Humanoids_FR_Mar2008.pdf [extrait le 2010-07-23]
- SUGIHARA T ED - KYUNG JIN KIM ET AL: "Simulated regulator to synthesize ZMP manipulation and foot location for autonomous control of biped robots" 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19 mai 2008 (2008-05-19), pages 1264-1269, XP031340321 ISBN: 978-1-4244-1646-2

## Description

La présente invention appartient au domaine des systèmes de programmation des robots. Plus précisément, elle s'applique à la commande de la marche et de la course de robots, notamment de forme humaine ou animale, qui se déplacent sur des membres articulés ou non. Un robot peut être qualifié d'humanoïde à partir du moment où il possède certains attributs de l'apparence et des fonctionnalités de l'homme: une tête, un tronc, deux bras, éventuellement deux mains, deux jambes, deux pieds... Dès le 17^{ème} siècle, la marche a été modélisée comme étant la progression d'un compas aux jambes écartées d'un pas fixe qui se déplacent dans une direction donnée (Borelli G., 1685, De motiu animalium, Vol. 1, Leiden, The Netherlands, Lugduni). Une autre image souvent employée est celle du double pendule inverse dans laquelle les deux pieds constituent des points en déplacement autour desquels les points supérieurs d'attache des deux jambes articulées auxdites hanches oscillent en décrivant des arcs dans la direction générale de marche.

Plus récemment, des travaux théoriques ont cherché à fusionner les principes de la modélisation de la marche ci-dessus rappelés avec ceux de la modélisation de la course dans lesquels le comportement de chaque jambe est assimilé à celui d'un ressort de coefficient d'extension et de longueur au repos donnés.

Ces concepts n'ont cependant pu être appliqués avec succès pour contrôler le déplacement de robots sur une période longue. Une des raisons de cette incapacité est probablement que le principe du pendule inverse n'a été utilement appliqué jusqu'à présent qu'aux objets auxquels une source extérieure fournissait l'énergie cinétique suffisante pour assurer la progression en avant au-delà de quelques pas. La motorisation des hanches ne suffit en effet pas, sauf exception telle que celle d'un robot patineur sur de la glace, à communiquer à un robot une énergie suffisante pour compenser les pertes liées aux frottements des pieds sur le sol.

La plupart des concepteurs de robots articulés sur des membres, notamment les industriels japonais tels que Honda et Sony, ont fait usage pour le pilotage de la marche de modes de réalisation variés d'un concept central baptisé « Zero Moment Point » ou ZMP. Selon ce concept, on détermine d'abord la trajectoire que doit avoir le ZMP dans un repère lié au sol pour satisfaire les conditions d'équilibre dynamique tout au long d'une trajectoire planifiée en fonction des objectifs de direction et de vitesse de la marche. Puis on calcule les positions des terminaisons et articulations du robot dans le même repère lié au sol à chaque instant par transformation inverse des équations déterminant les positions respectives du ZMP et desdites terminaisons et articulations. Cette approche présente notamment les inconvénients suivants : i) elle suppose une connaissance de la topographie du sol permettant de positionner à tout moment le ZMP et les points utiles du robot dans un repère lié au sol ; ii) elle nécessite un calcul complet de planification de trajectoire, ce qui est très exigeant en puissance de calcul. Différentes améliorations du concept de base ont été proposées au fil des ans pour limiter les inconvénients de cette approche. Mais, à ce jour, aucune amélioration n'a permis de les supprimer totalement.

C'est précisément un des objectifs de la présente invention de résoudre ce problème en supprimant la référence au ZMP, et en combinant un modèle de la marche piloté par les déplacements balistiques des hanches avec une fourniture d'énergie cinétique au robot par l'activation du talon, dans une approche plus efficace car elle modélise mieux la marche réelle.

L'article "Energetic Consequences of Walking Like an Inverted Pendulum: Step-to-Step Transitions" de Arthur D.kuo, J. Maxwell Donelan et Andy Ruina divulgue un procédé de contrôle de la marche d'un robot selon le préambule de la revendication 1 de la présente invention. Ce procédé ne permet cependant pas de pallier aux inconvénients cités ci-dessus.

A cet effet, la présente invention divulgue un procédé de contrôle de la marche d'un robot apte à se déplacer sur au moins deux membres sur une surface de progression, ledit procédé comprenant, pour chaque pas, au moins une première étape de mouvement de chacune des hanches sur une trajectoire sensiblement sphérique centrée sur l'extrémité en appui au sol du membre rattaché à ladite hanche et une deuxième étape de mouvement de la dite extrémité vers un nouveau point d'appui, ledit procédé étant caractérisé en ce qu'il comprend en outre une étape de calcul d'une position du nouveau point d'appui de ladite extrémité sur la surface de progression en fonction de la vitesse du centre de masse du robot.

Avantageusement, le procédé de l'invention comprend en outre une autre étape intermédiaire entre lesdites première et deuxième étape au cours de laquelle l'élongation entre l'extrémité du membre en appui au sol et la dite hanche est augmentée d'une valeur telle que le segment joignant la position de ladite hanche en fin d'une trajectoire sphérique à la position de la deuxième hanche en début de la trajectoire sphérique suivante est sensiblement parallèle à la surface de progression.

Avantageusement, l'axe du thorax du robot est asservi pour rester dans un angle sensiblement constant avec la verticale.

Avantageusement, l'axe des hanches est asservi en fonction de la direction de la marche.

Avantageusement, l'augmentation de l'élongation entre l'extrémité du membre en appui au sol et la dite hanche est procurée par une impulsion de ladite extrémité sur le sol déclenchée par une commande en pitch d'une articulation de cheville prévue dans ledit membre.

Avantageusement, l'augmentation de l'élongation entre l'extrémité du membre en appui au sol et la dite hanche est procurée par une impulsion de ladite extrémité sur le sol déclenchée par une commande de l'articulation du genou.

Avantageusement, l'augmentation de l'élongation entre l'extrémité du membre en appui au sol et la dite hanche est procurée par une impulsion de ladite extrémité sur le sol déclenchée par une commande d'un vérin dans la jambe, parallèle à cette dernière.

Avantageusement, les impulsions du talon sont déclenchées lorsque la direction de la jambe a un angle par rapport à la verticale supérieur à un angle limite dépendant de la vitesse du COM et d'une consigne de vitesse de la marche.

Avantageusement, l'articulation motorisée permettant l'impulsion est commandée par une rampe de vitesse fonction de l'accélération limite du moteur et du rapport de la vitesse du centre de masse à la consigne de vitesse de marche.

Avantageusement, la course du pied dans la direction de la marche dépend de variables choisies dans le groupe comprenant la position du centre de masse dans la même direction, la longueur du membre, la longueur du pied et la vitesse du centre de masse dans la direction de marche. Avantageusement, la course du pied perpendiculaire à la direction de la marche dépend de variables choisies dans le groupe comprenant la position du centre de masse dans la même direction, la consigne de direction de marche, la largeur de hanche, la vitesse dans la direction perpendiculaire à la direction de marche et la consigne de vitesse de marche.

Avantageusement, au moins un membre est apte à être commandé pour réaliser un mouvement de décélération avant que son extrémité ne touche la surface de progression.

L'invention divulgue également un robot apte à se déplacer sur une surface de progression sur au moins deux membres, ledit robot comprenant au moins un module apte à générer pour chaque pas un mouvement de chacune des hanches sur une trajectoire sensiblement sphérique centrée sur l'extrémité en appui au sol du membre rattaché à ladite hanche et un module apte à générer un mouvement de la dite extrémité vers un nouveau point d'appui, ledit robot étant caractérisé en ce qu'il comprend en outre un module pour calculer une position du nouveau point d'appui de ladite extrémité sur la surface de progression en fonction de la vitesse du centre de masse du robot.

Avantageusement, au moins un des membres comporte un vérin dont l'axe est parallèle à l'axe dudit membre.

Avantageusement, au moins une extrémité d'un desdits membres comporte un pied comprenant au moins deux articulations en pivot d'axes sensiblement parallèles entre eux, et sensiblement perpendiculaires à la direction du pied, l'une proche de l'extrémité avant du pied et l'autre proche du talon.

Avantageusement, au moins une extrémité d'un desdits membres comporte un pied dont l'extrémité avant comprend un arrondi dont la forme est prévue pour déclencher un levé de talon lorsque l'extrémité avant du pied pivote vers l'avant.

Avantageusement, un robot selon l'invention comprend en outre un ensemble de capteurs inertiels permettant de conserver sensiblement constante l'orientation d'un repère lié à une partie du robot par rapport à un repère extérieur fixe.

Avantageusement, un robot selon l'invention comprend en outre un ensemble de capteurs inertiels permettant de mesurer avec précision les accélérations et les vitesses, linéaires et angulaires, du thorax ou de la tête, permettant d'en déduire la vitesse vectorielle du centre de gravité.

Pour mettre en oeuvre l'invention, il n'est pas nécessaire de connaître la géométrie du sol qui n'intervient pas directement dans la stabilisation. Cela ne pose pas de problème particulier dans le cas de surfaces de progression planes ou régulières (telles que des escaliers). Cela devient très difficile, voire impossible dans le cas de surfaces accidentées. Selon l'invention, il est possible, comme on le verra plus loin, de repérer le robot dans un repère galiléen fixe sans connaître la géométrie du sol et de contrôler les mouvements de marche dans un repère du robot stabilisé par rapport au repère extérieur.

De plus, un robot réalisé selon un des modes de l'invention aura une vitesse possible de déplacement supérieure à la vitesse d'un robot de l'art antérieur dont la marche est contrôlée par ZMP. En effet, dans le cas d'un robot de l'art antérieur, le robot doit régler sa vitesse de déplacement sur la capacité de calcul des processeurs embarqués, largement sollicités par la nécessité d'effectuer en continu des calculs prédictifs de trajectoire de déplacement qui sont complexes car ils reposent sur une modélisation de l'évolution des forces d'accélération (preview controllers). Cela n'est plus le cas pour des robots réalisés selon l'invention qui peuvent ainsi, à puissance de calcul égale, se déplacer plus rapidement. On peut espérer ainsi atteindre 5 Km/h pour un robot d'1,3m de hauteur ayant des jambes d'environ 70 cm.

En outre, la marche peut être commandée sans avoir à positionner la position future du pied qui se déplace de manière précise, alors que dans le calcul du ZMP la connaissance précise des positions des pieds et des forces de réaction du sol à ces positions est indispensable.

L'invention procure également l'avantage de répliquer de manière très proche la marche humaine véritable. Cela permet à la fois un rendu plus réaliste des mouvements du robot et une programmation de comportements du robot très proches de ceux d'un être humain. On peut tout à fait envisager selon un mode de réalisation de l'invention de programmer ainsi un robot pour qu'il soit capable d'effectuer des sauts, éventuellement avec cabriole avant ou arrière.

L'invention sera mieux comprise et ses différentes caractéristiques et avantages ressortiront de la description qui suit de plusieurs exemples de réalisation et de ses figures annexées dont :
- La figure 1 est une illustration des principes d'un algorithme de contrôle de la marche d'un robot selon un document de l'art antérieur.
- La figure 2 est une vue schématisée en deux dimensions du modèle de marche mis en oeuvre dans un mode de réalisation de l'invention selon une vue perpendiculaire à l'axe de déplacement et comportant les différentes articulations importantes et le centre de masse;
- La figure 3 est une vue schématique d'un robot montrant les principaux points caractéristiques utilisés pour contrôler sa marche dans un mode de réalisation de l'invention ;
- La figure 4 est une vue schématique d'un robot montrant les principaux points, axes et angles utilisés pour contrôler sa marche dans un mode de réalisation de l'invention ;
- La figure 5 est une vue détaillée de la partie de la figure 4 centrée sur le pied ;
- La figure 6 est une vue schématique montrant un premier mode de réalisation de pied de robot pour mettre en oeuvre le procédé de l'invention en permettant le levé du talon lors de la phase d'impulsion pendant la marche ;
- La figure 7 est une vue schématique montrant un deuxième mode de réalisation de pied de robot pour mettre en oeuvre le procédé de l'invention avec une articulation pivot située à l'avant du pied ;
- La figure 8 montre par une vue latérale les trajectoires d'une jambe, de la hanche et du centre de masse d'un robot selon un mode de réalisation de l'invention;
- La figure 9 montre par une vue de trois-quarts avant les trajectoires des deux jambes, des deux hanches et du centre de masse d'un robot selon un mode de réalisation de l'invention ;
- La figure 10 est un organigramme de traitements informatiques pour mettre en oeuvre l'invention selon un de ses modes de réalisation.

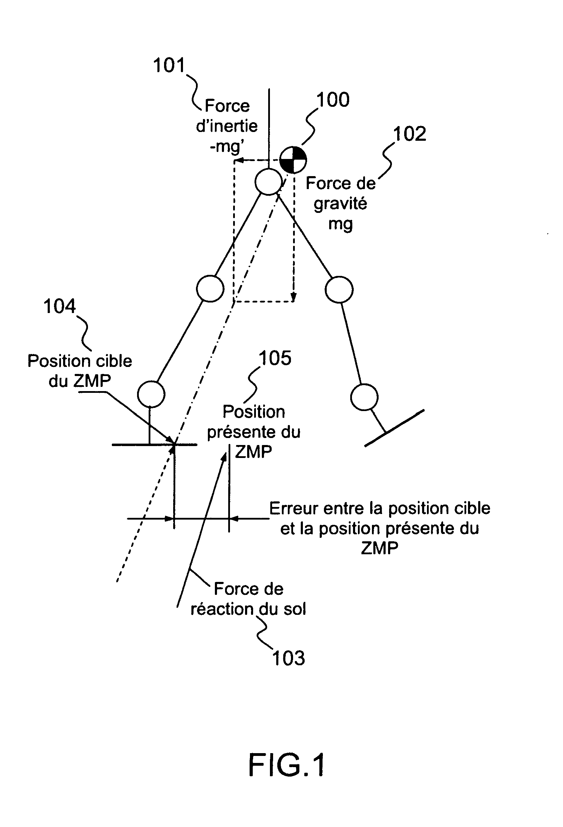

La figure 1 est une illustration des principes d'un algorithme de contrôle de la marche d'un robot selon un document de l'art antérieur.

### Il s'agit là d'un robot humanoïde

Cette figure est extraite du brevet US 5,357,433 délivré le 18/10/1994 à Takenaka et alii (Honda). Le brevet porte sur la mise en oeuvre d'un algorithme ZMP. D'après les principes fondamentaux de la dynamique, la somme du moment de la force d'inertie 101 et du moment de la force de gravité 102, composés au centre de masse 100, doit être équilibrée par le moment de la force de réaction appliquée sur la sole du pied en contact avec le sol. Ces conditions déterminent une suite de positions cibles 104 du ZMP, qui se situent à l'intersection au sol de l'axe inertiel reliant le centre de masse et le point d'application de la force de réaction. Le mouvement réel du robot détermine un ZMP réel. Les mouvements du robot sont commandés pour ramener la trajectoire des ZMP réels sur la trajectoire des ZMP cibles. Pour cela il faut connaître l'orientation des forces de réaction du sol et donc la surface de celui-ci. L'invention permet de s'affranchir de cette connaissance en faisant appel à une autre condition de stabilité du robot.

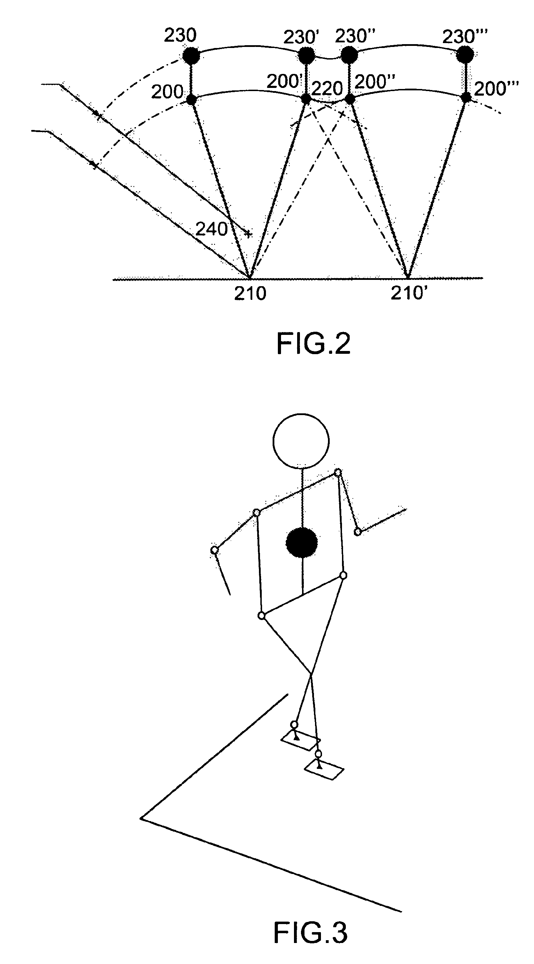

La figure 2 est une vue schématisée en deux dimensions du modèle de marche mis en oeuvre dans un mode de réalisation de l'invention selon une vue perpendiculaire à l'axe de déplacement et comportant les différentes articulations importantes et le centre de masse;.

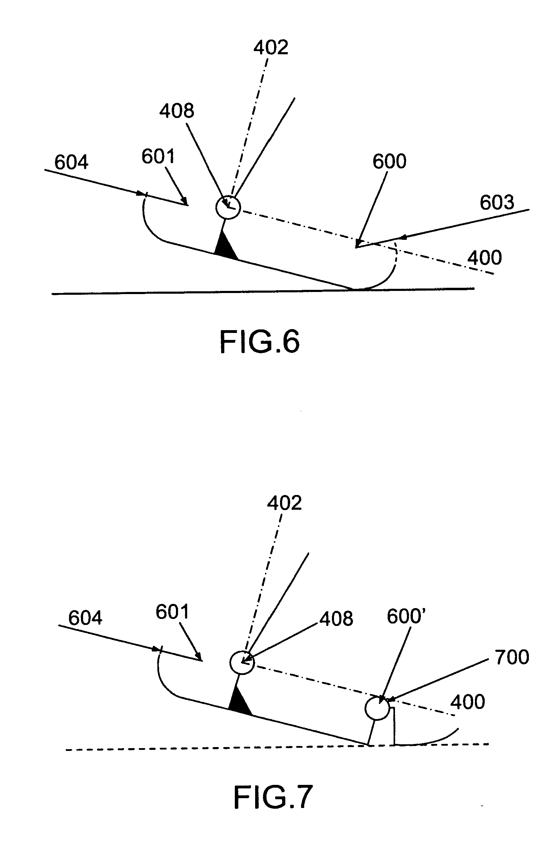

On suit sur la figure le déplacement d'une des hanches qui parcourt 4 positions 200, 200', 200" et 200"' alors que le pied de cette jambe se déplace d'une première position au sol 210 à une deuxième position au sol 210'. Pendant que le pied est sur son premier appui 210, la hanche décrit un premier arc 200, 200' qui s'inscrit sur une sphère centrée en 210. En parallèle le deuxième pied (non représenté sur la figure) se déplace de son ancien point d'appui vers son nouveau point d'appui, le point 210'. Lorsque celui-ci est atteint, la hanche correspondante décrit un deuxième arc 200", 200"'. Concomitamment, le centre de masse (Centre Of Mass ou COM) où se concentre, dans le modèle simplifié pris en compte, toute la masse du robot, suit une trajectoire 230, 230', 230", 230"'. Cette trajectoire est également une succession d'arcs de sphères dont un des centres (celui correspondant aux positions 200, 210, 230) est référencé 240 sur la figure. Ces deux mouvements sont balistiques, c'est-à-dire qu'ils pourraient se poursuivre sans apport d'énergie extérieure si la transition entre les points 200' et 200" n'était l'occasion d'une perte d'énergie liée à la nécessité de « remonter » sur la deuxième sphère. Selon l'invention, de l'énergie est apportée au système pour permettre cette remontée. Cet apport d'énergie permet d'éviter que la hanche ne descende à chaque pas en dessous d'un certain niveau par rapport à la surface de progression. Ainsi, le mouvement est entretenu. Il y a plusieurs manières de réaliser cet apport d'énergie. Le point commun entre elles est que, pendant cet apport, la distance entre la hanche et le point d'appui au sol du membre correspondant s'allonge, comme cela s'observe sur la figure : la longueur 210, 200" est supérieure à la longueur 210, 200'. Pour réaliser cette élongation on peut par exemple prévoir un vérin dans chaque membre qui est actionné au moment voulu pour déclencher l'impulsion. On peut également réaliser l'élongation en conservant le genou du robot plié pendant la phase balistique et en le dépliant pour provoquer l'impulsion. De manière plus proche de la marche humaine, il est aussi possible de prévoir différents modes de levé du talon qui procurent une élongation entre le point d'appui du membre au sol (des orteils, une extrémité avant arrondie du pied) et la hanche. Ces différents modes de réalisation de l'élongation procurant un apport d'énergie à la marche, qui se produit dans la zone 220 de la figure 2, seront exposés plus loin dans la suite de la description, notamment dans les commentaires relatifs aux figures 6 et 7. Avantageusement, la descente sur l'arc de sphère peut avoir été auparavant freinée, ce qui correspond à la réalité du mouvement de marche humain.

La figure 3 est une vue schématique d'un robot montrant les principaux points caractéristiques utilisés pour contrôler sa marche dans un mode de réalisation de l'invention.

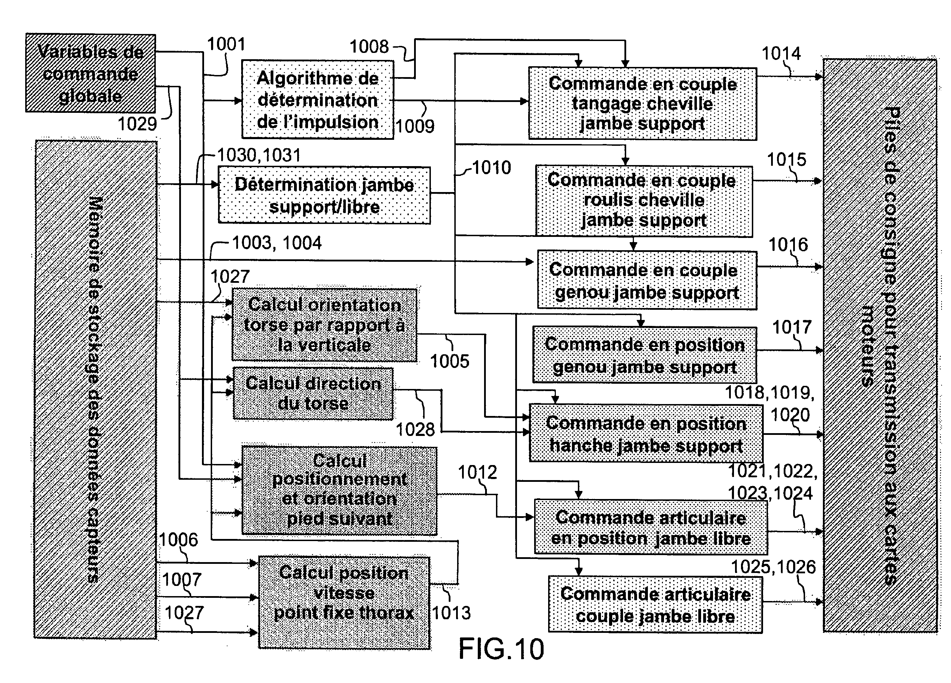

Cette vue de trois-quarts avant permet d'illustrer les positionnements relatifs des principaux éléments qui permettent le contrôle de la marche. Chacune des hanches, positionnées à l'extrémité d'un axe figurant le bassin, décrit au cours de la marche une trajectoire qui est une succession d'arcs de sphère. Ceux-ci sont reliés par des phases au cours desquelles une impulsion est apportée à une des jambes par l'intermédiaire d'une impulsion donnée par l'articulation pivot de la cheville dont l'axe est parallèle au plan frontal, entrainant une rotation de la partie du pied portant cette articulation, autour d'une articulation pivot située à l'avant du pied. Visuellement, ce mouvement correspond au lever du talon du pied d'appui. Le COM suit une trajectoire qui est déterminée à la fois par les parcours des deux hanches sur les arcs de sphères et par les mouvements de rotation du bassin autour du thorax qui permet de piloter la direction de la marche, comme explicité plus loin dans la description, notamment en commentaire à la figure 10.

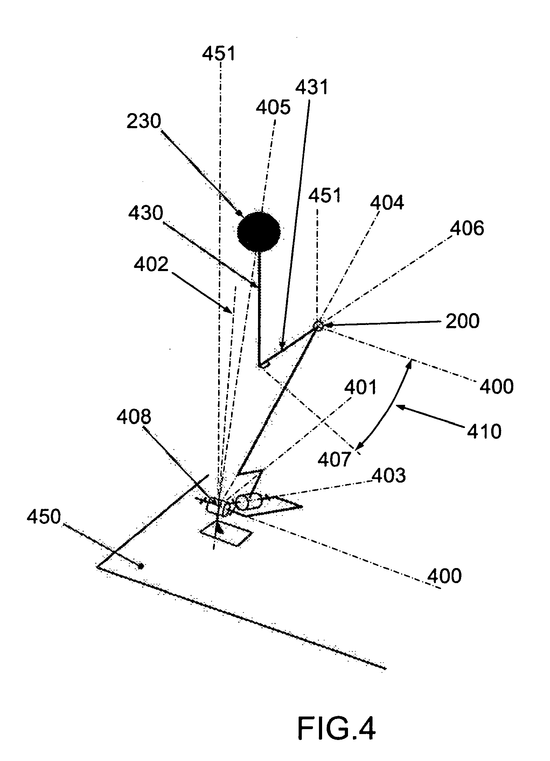

La figure 4 est une vue schématique d'un robot montrant les principaux points, axes et angles utilisés pour contrôler sa marche dans un mode de réalisation de l'invention.

Les repères sur la figure désignent les éléments suivants :
- 400 : direction du pied, qui est aussi la direction du pivot de roulis de la cheville ;
- 402 : direction perpendiculaire à la surface de la semelle, dirigée vers le haut (qui n'est pas forcément verticale) ;
- 401 : perpendiculaire à 400 et 402, tel que le système d'axes (400, 401, 402) constitue un repère orthonormé direct ;
- 403 : direction du pivot de tangage de la cheville ;
- 404 : direction de la jambe, donnée par la droite passant par le centre de la hanche 200 et le point 408 ;
- 405 : droite passant par 408 et le COM, et par extension direction de cette droite ;
- 406 : droite passant par les centres des hanches droite et gauche (axe du bassin), et par extension, direction de cette droite ;
- 407 : direction orthogonale à 406, dirigée vers l'avant ;
- 408 : centre de la rotule de la cheville situé à l'intersection des droites 400, 401 et 402 ;
- 430 : droite symbolisant la direction du thorax ;
- 450 : sol (qui n'est pas forcément horizontal);
- 451 : verticale.

En position au repos, les directions 402 et 404 (respectivement 401 et 403) sont confondues.

Le système jambe - hanche - thorax est modélisé comme représenté sur la figure : la jambe 404 est reliée à la hanche 200 ; la hanche 200 est reliée par un demi bassin à l'axe du thorax 430 auquel le bassin est perpendiculaire. Le centre de masse COM, 230 est situé sur l'axe 430. Les masses des solides intermédiaires sont considérées comme négligeables. Le robot est assimilé à une masse ponctuelle située au centre de masse COM, 230.

Dans les descriptions suivantes, les mouvements des différents points du robot sont repérés dans le repère lié au pied du robot en appui au sol. Dans ce repère centré sur la cheville 408, les axes 400, 401, 402 définissent respectivement la direction de l'axe du pied, l'axe parallèle à la semelle et perpendiculaire à 400, passant par la cheville 408 et la perpendiculaire vers le haut au plan formé par les deux droites 400, 401. Au cours de la marche, ces repères (408, 400, 401, 402) constituent une succession de repères galiléens. On détermine la vitesse du centre de masse, qui est le centre d'un repère non galiléen (repère R₀), dans ce repère galiléen qui est fixe au début de chacune des phases balistiques. Cela permet de calculer la position suivante du pied à chaque pas de manière indépendante des positions antérieure et postérieure, donc sans avoir à déterminer une trajectoire, contrairement à ce qui est nécessaire dans les calculs ZMP. Il n'est donc pas utile de résoudre les équations du Principe Fondamental de la Dynamique. Pour cela, il est seulement nécessaire de disposer par exemple d'une centrale inertielle ou plus généralement de combinaisons de gyromètres et d'accéléromètres. Ces capteurs peuvent être positionnés par exemple dans le thorax ou dans la tête, ceci devant cependant demeurer autant que possible stables. On s'affranchit ainsi de la nécessité de connaître le sol pour en déduire la verticale. On définit également une direction 404, colinéaire à la jambe et une direction 405 qui passe par la cheville 408 et le centre de masse COM.

Dans un des modes de réalisation de l'invention, on asservit la direction de l'axe thoracique 430 à un angle sensiblement constant par rapport à la verticale, connue par exemple par la centrale inertielle, ceci de manière à stabiliser autant que faire se peut ladite centrale inertielle. On commande également les mouvements de l'axe des hanches 406 par l'angle 410 qu'il fait avec l'axe 400 du référentiel du pied. A titre purement illustratif, on peut par exemple fixer la consigne appliquée à cet angle 410 de tel sorte qu'il soit égal, au moment du posé du futur pied d'appui, à la moitié de l'angle que fait celui-ci avec le pied actuel.

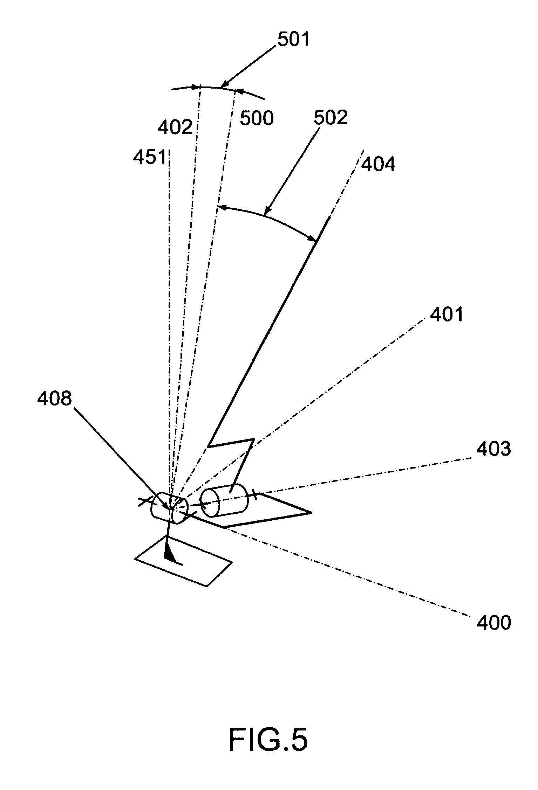

La figure 5 est une vue détaillée de la partie de la figure 4 centrée sur le pied. On a sur cette figure les repères supplémentaires suivants :
- 500 : direction telle que (400, 403, 500) soit un repère orthonormé direct. C'est donc le résultat de la rotation d'angle 501 autour de 400, appliquée à 402.
- 501 : angle de rotation autour de 400 ; c'est l'angle de roulis de la cheville ; la position au repos est définie telle que la direction 403 est identique à la direction 401 et 500 identique à 402 ;
- 502 : angle de rotation autour de 403 ; c'est l'angle de tangage cheville ; la position au repos est définie telle que la direction 404 est identique à la direction 500.

Dans un mode de réalisation, le robot comporte trois articulations dans le pied :
- Une articulation (située au point 408) permettant de commander les mouvements du pied en pitch (angle 502 de tangage dans le plan de la marche) ;
- Une articulation permettant de commander les mouvements du pied en roll (angle 501 de roulis dans le plan des hanches au repos) ;
- Un pivot permettant de commander les mouvements de l'avant du pied, encore appelé orteils, en pitch (angle de tangage dans le plan de la marche) par rapport au sol.

Les deux articulations situées au point 408 (articulations de la cheville) sont motorisées, l'articulation de l'avant du pied peut être passive ou motorisée. De même, la hanche comportera préférentiellement une rotule motorisée, par exemple par trois pivots ou un système cinématique parallèle. [la motorisation de cette hanche doit permettre d'asservir l'axe du thorax 430 sur un angle sensiblement constant par rapport à la verticale, et le mouvement des hanches 406. La puissance de ces moteurs sera dimensionnée en fonction de la réactivité voulue de la marche. Avantageusement, elles peuvent être commandées par un système informatique tel que celui divulgué par la demande FR08/01956000 déposée par la demanderesse de la présente demande portant sur une architecture de contrôle commande à trois niveaux d'un robot mobile utilisant des membres articulés. Un premier processeur élabore des commandes de haut niveau qui sont passées à un deuxième processeur qui gère les communications avec les cartes de commande des moteurs.

Dans un mode de réalisation de l'invention, pour trouver la solution de marche, on résout le système en deux phases :
- Dans une première phase, le talon est au sol ; le système considéré est constitué par la masse du robot appliquée au centre de masse COM, par les segments sans masse constitués par la jambe et par l'axe du thorax reliant le centre de masse à l'axe des hanches ; la force extérieure appliquée au système est la résultante du poids (gravité appliquée à la masse du robot en COM) et de la force résultant de l'appui plan du pied au sol (force de sens contraire sensiblement dirigée suivant 405) ;
- Dans une deuxième phase, le système est constitué par le système précédent auquel on ajoute le pied ; le paramètre de commande est l'angle 502; ce paramètre de contrôle est par exemple donné par une rampe de vitesse angulaire du moteur de l'articulation en pitch de la cheville qui peut par exemple être fonction de l'accélération angulaire limite du moteur et du rapport de la vitesse du centre de masse à la consigne de vitesse de marche. Avantageusement, cette consigne est donnée en couple. En effet, on veut transmettre de l'énergie au système, donc un effort le long d'un déplacement. Avec une commande en couple, on contrôle plus finement l'énergie que l'on apporte au système. En outre, comme il faut forcer sur la cheville pour faire se lever le talon, indépendamment de la position de ladite cheville, une commande en position est compliquée, car on doit d'abord mesurer la position et la vitesse de la cheville, puis faire une rampe à partir de ce point de fonctionnement. Ces calculs sont plus compliqués et mobilisent donc plus de puissance de calcul que l'application d'une commande de couple en nombre de Nm.

Pour les deux phases, on pourrait résoudre les équations du mouvement qui s'obtiennent en écrivant le Principe Fondamental de la Dynamique (PFD) appliqué au système. Mais ces calculs ne sont pas nécessaires : les phases balistiques n'ont pas besoin d'être calculées car elles ne nécessitent pas l'application de commandes particulières. Pour les phases de commandes en impulsion, qui sont indépendantes les unes des autres, aucun calcul de trajectoire n'est nécessaire, seuls les paramètres de vigueur et du moment de déclenchement de l'impulsion sont à calculer. Enfin, la position du pied au pas suivant doit elle aussi être calculée en fonction de la vitesse du COM prise à des moments choisis de la phase balistique.

Les différents calculs permettant de déterminer ces éléments sont donnés plus loin dans la suite de la description, en commentaire à la figure 10.

La figure 6 est une vue schématique montrant un premier mode de réalisation de pied de robot pour mettre en oeuvre le procédé de l'invention en permettant le levé du talon lors de la phase d'impulsion pendant la marche.

La figure 7 est une vue schématique montrant un deuxième mode de réalisation de pied de robot pour mettre en oeuvre le procédé de l'invention avec une articulation pivot située à l'avant du pied.

Les deux figures représentent des variantes de mise en oeuvre.

On a sur ces figures les repères supplémentaires suivants :
- 600 : axe du cylindre avant 603 ;
- 600' : axe du pivot 700 ;
- 601 : axe du cylindre arrière 604 ;
- 603 : cylindre avant permettant le levé du talon ;
- 604 : cylindre arrière permettant le levé de la pointe du pied ;
- 700 : pivot entre pied et orteils.

Le pied du robot doit être configuré de manière à pouvoir effectuer des mouvements de tangage autour de sa partie avant et autour de sa partie arrière. A cet effet, chaque pied du robot est avantageusement conformé avec un cylindre avant 603 d'axe 600 (ou un orteil en pivot 700 d'axe 600') et un cylindre arrière 604 d'axe 601, les axes 600 (ou 600'), 601 étant parallèles à la semelle, et perpendiculaires à la direction du pied 400.

Les mouvements de tangage avec l'un ou l'autre des exemples de pied (Fig. 6 et Fig. 7) sont le résultat de la dynamique du système soumis à l'action pilotée du moteur de l'articulation en tangage de la cheville tel que décrit précédemment. La vitesse du centre de masse crée une énergie cinétique qui facilite l'élongation du membre en appui, même en l'absence de pivot aux orteils, lorsque l'extrémité avant du pied est arrondie (phénomène « culbuto »). L'action du pivot, prévue dans la variante de réalisation de la figure 7 permet cependant un meilleur contrôle du déclenchement de l'impulsion et une meilleur stabilité des appuis et donc un meilleur ajustement de la vitesse de marche à une consigne

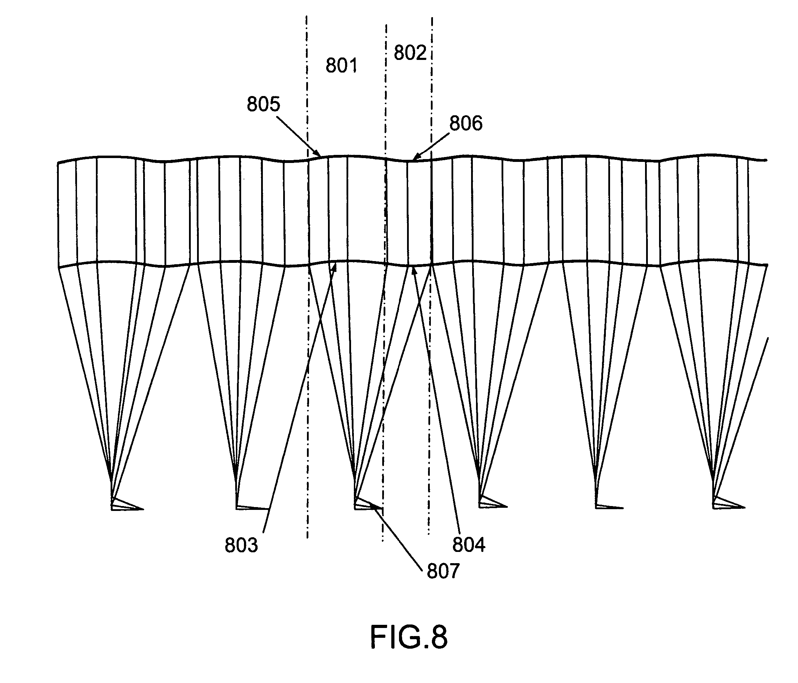

La figure 8 montre par une vue latérale les trajectoires d'une jambe, de la hanche et du centre de masse d'un robot selon un mode de réalisation de l'invention.

Les repères sur la figure désignent les éléments suivants :
- 801 : une phase balistique ;
- 802 : une phase d'impulsion ;
- 803: la trajectoire de la hanche de la jambe de support pendant la phase balistique 801 ;
- 804 : la trajectoire de la hanche de la jambe de support pendant la phase d'impulsion 802 ;
- 805 : la trajectoire du COM pendant la phase balistique 801 ;
- 806 : la trajectoire du COM pendant la phase d'impulsion 802 ;
- 807 : le pied pendant la phase d'impulsion (de levé de talon).

La marche d'un robot dont on ne voit à chaque pas que la seule jambe d'appui est schématisée sur la figure :
- le centre de masse COM décrit localement une trajectoire sur un arc de sphère décalé par rapport à la sphère décrite par la hanche ;
- la hanche décrit un arc qui s'inscrit sur une sphère dont le centre est le centre de la cheville (précédemment repéré 408 sur la figure 4);
- la jambe oscille comme un pendule inverse pendant les appuis au sol et progresse pas à pas. Entre chaque pendule inverse se trouve la phase d'impulsion de la cheville.

Dans cet exemple, la vitesse moyenne de marche est d'environ 1.45 m/s et la durée d'un pas d'environ 0.25s.

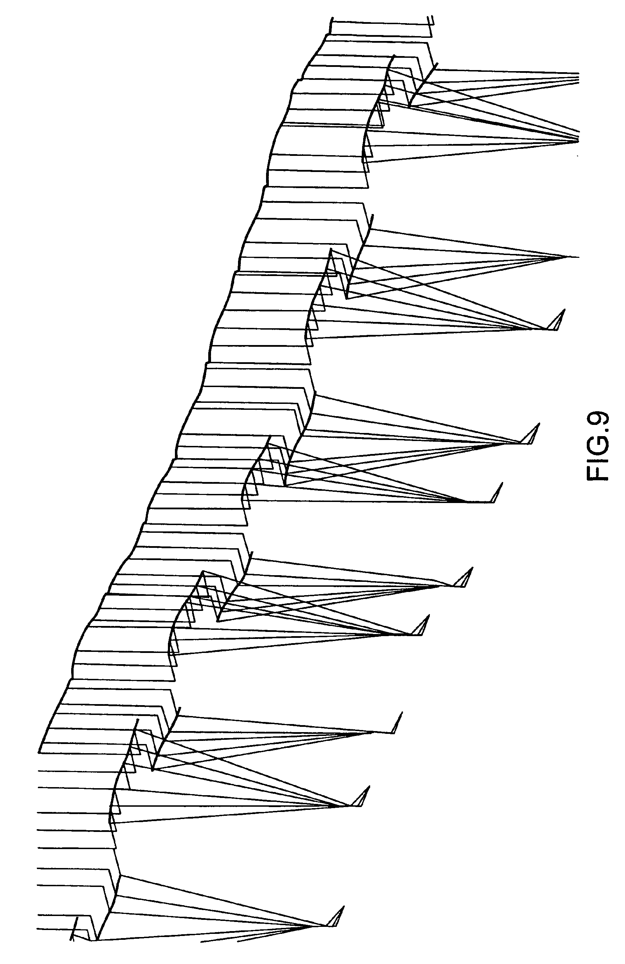

La figure 9 montre par une vue de trois-quarts avant les trajectoires des deux jambes, des deux hanches et du centre de masse d'un robot selon un mode de réalisation de l'invention.

On peut ainsi mieux observer la manière dont progresse la marche. En particulier, le centre de masse suit une trajectoire dans le plan vertical qui est lissée par les impulsions données par le talon entre les arcs de sphère décrits pendant le déplacement d'un membre au sol. La marche se déroule dans la direction de la consigne. La marche est ainsi « quasi humaine », ce qui est un des objectifs de l'invention.

Dans le mode de réalisation illustré, la marche est fonctionnellement décomposée en trois phases :
- Une phase «pseudo libre » : dans cette phase, la cheville n'est pas motrice du mouvement ; c'est une phase balistique, pendant laquelle la hanche suit une trajectoire balistique, déterminée par la vitesse et la position d'entrée dans cette phase ; on contrôle la trajectoire en motorisant la cheville pour diminuer l'effet des frottements sec et visqueux en tangage et freiner plus ou moins en roulis ; à défaut, l'articulation de la cheville peut être débrayée;
- Une phase d'impulsion : c'est la phase pendant laquelle on amène de l'énergie à la marche ; pendant cette phase, la cheville en tangage (pitch) est contrôlée, par exemple, par une rampe de vitesse ;
- Une phase de positionnement réactif du pied suivant : c'est une marche réactive ; à chaque pas, l'algorithme de marche détermine la position du pied suivant. Cette position est déterminée en prenant en compte la vitesse et l'accélération du centre de gravité (choisies à certaines positions clés), la consigne « haut niveau » de direction et la consigne « haut niveau de vitesse ».

La figure 10 est un organigramme de traitements informatiques pour mettre en oeuvre l'invention selon un de ses modes de réalisation.

L'algorithmie de contrôle de la marche est illustrée par la figure qui indique, dans un mode de réalisation de l'invention, les variables de commande globale 1001, 1002 et les données issues de la mémoire de stockage des données capteurs 1003, 1004, 1005, 1006, 1007 qui sont passées aux modules de traitement pour élaborer les variables d'état et les consignes à transmettre aux cartes moteurs, lesdites consignes étant stockées dans des piles traitées par les processeurs du robot. La signification des variables est la suivante :
- 1001 : consigne de vitesse de marche ;
- 1003 : position articulaire genou ;
- 1004 : vitesse angulaire articulaire genou ;
- 1005 : angles orientation du_torse dans repère Ro (étant entendu que Ro est stabilisé « horizontal ») ;
- 1006 : positions_articulaires_jambe support ;
- 1007 : vitesses_articulaires_jambe support ;
- 1008 : variable d'état impulsion / pas impulsion ;
- 1009 : paramètres de l'impulsion (détaillés dans l'explication des traitements permettant de les élaborer);
- 1010 : variable d'état jambe support/libre ;
- 1012 : Consigne_position_cartesienne pied suivant ;
- 1013 : position et vitesse centre du thorax ;
- 1014 : Consigne_torque_ankle_pitch quand la jambe est en support;
- 1015 : Consigne_torque_ankle_roll quand la jambe est en support;
- 1016 : Consigne_torque_knee_pitch quand la jambe est en support;
- 1017 : Consigne_position_knee_pitch quand la jambe est en support;
- 1018 : Consigne_position_hip_pitch quand la jambe est en support;
- 1019 : Consigne_position_hip_roll quand la jambe est en support;
- 1020 : Consigne_position_hip_yaw quand la jambe est en support;
- 1021 : Consigne_position_hip_pitch, même variable que 1018 quand la jambe est libre ;
- 1022 : Consigne_position_hip_roll, même variable que 1019 quand la jambe est libre ;
- 1023 : Consigne_position_hip_yaw, même variable que 1020 quand la jambe est libre ;
- 1024 : Consigne_position_knee_pitch, même variable que 1017 quand la jambe est libre ;
- 1025 : Consigne_torque_ankle_pitch, même variable que 1014 quand la jambe est libre;
- 1026 : Consigne_torque_ankle_roll, même variable que 1015 quand la jambe est en l'air ;
- 1027 : Données centrale inertielle ;
- 1028 : Consigne direction torse ;
- 1029 : Consigne de direction de marche ;
- 1030 : données capteurs pressions sous les pieds ou d'effort sur le pied ;
- 1031 : mesures de courant des moteurs des jambes.

Les boîtes dans la partie centrale de la figure effectuent chacune une partie des traitements des types suivants:
- Un premier groupe de modules permet de déterminer des variables d'état (telles que la présence ou l'absence d'une impulsion, 1008 ; ou l'état de la jambe en support ou libre, 1009) ; ils sont situés en haut à gauche de la figure (« Algorithme de détermination de l'impulsion » et « Détermination jambe support/libre », étant entendu que le premier module permet également d'élaborer des paramètres de consigne ;
- Un deuxième groupe de modules permet d'effectuer les calculs de position de la partie haute du robot (en bas à gauche de la figure) ;
- Un troisième groupe de modules permet d'élaborer les commandes en couple des articulations de la cheville et du genou (en haut à droite de la figure);
- Un quatrième groupe de modules permet d'élaborer les commandes en position du genou et de la hanche lorsque la jambe est en position de support et les commandes articulaires en position lorsque la jambe est libre (partie en bas à droite de la figure), étant entendu que certaines articulations sont commandées en positions et d'autres en couples lorsque la jambe est libre.

Les algorithmes de calculs mis en oeuvre dans les principaux modules sont détaillés ci-dessous :
- Module « Détermination jambe support / libre » :
   Le module renvoie deux variables d'état référencées 1010: *etat_jambe_droite* et *etat_jambe_gauche*
   Chaque variable peut prendre 2 *valeurs : support* et *libre.*

La détermination se fait en comparant les valeurs des mesures des courants moteurs, et des capteurs d'effort sur les pieds ou capteurs de pression sous les semelles.
- Module « Algorithme de détermination de l'impulsion » :
   Le module prend en entrée la consigne de vitesse de marche globale V_consigne (en m/s). On peut à titre d'exemple non limitatif fixer une vitesse de consigne comprise entre 0.5 et 1.5 m/s.

L'impulsion est déterminée à partir d'un certain nombre d'angles caractéristiques (en radians), les valeurs numériques étant données à titre d'illustration de situations typiques, sans que l'invention puisse être considérée comme ne s'appliquant qu'à des situations mesurées par ces valeurs:
○ Angle_cone_de_base, pris par exemple 0.262 rd (15°), qui correspond à un pas moyen ;
○ Angle_cone_frottement = arctan(0.3), qui correspond à l'adhérence d'une surface normale ;
○ Angle_cone_corrigé = angle_cone_de_base*(1-max(0.3, 0.2*V_consigne/norm(V_com))), formule dans laquelle V_com est la vitesse du centre de masse ; cette correction permet de prendre en compte la vitesse du robot par rapport à la vitesse à atteindre ; si le robot ne va pas assez vite, il faut accélérer, et donc avoir une phase d'impulsion plus grande (qui démarre plus tôt) et donc réduire l'angle du cône ; la correction est inverse si l'on va trop vite ; dans les deux cas la correction est bornée;
○ Angle_1 = angle entre directions 402 et 405 ;
○ Angle_2 = angle entre directions 402 et 404.

On détermine le moment auquel doit démarrer l'impulsion par l'application des deux règles suivantes:
SI (angle_1 > Angle_cone_frottement) => déclencher impulsion
SI (angle_2 > Angle_cone_corrigé) et SI (V_Z_com < 0) => déclencher impulsion (dans cette formule, V_Z_com désigne la vitesse du centre de masse sur l'axe vertical)._

On détermine ensuite la force d'impulsion. Par exemple, on peut déterminer les paramètres d'asservissement de la cheville pour la phase d'impulsion, avec une commande de type « trapèze de vitesse »
Coef_vitesse_imputs = V_consigne/norm(V_com)
Consigne_acc_tangage_cheville = -max(abs(acceleration_max_tangage), 0.5* Coef_vitesse_impuls *acceleration_max_tangage)
Consigne_vit_tangage_cheville = -max(abs(vit_max_tangage), 0.5* Coef_vitesse_impuls *vit_max_tangage)

Les accélérations et vitesses sont négatives car on déplie la cheville (on baisse le pied).
- Module « Calcul Position pied suivant » :

En entrée, il reçoit
o l'ensemble de variables référencé 1013 : position du centre de masse COM (X_com, Y_com, Z_com), et vitesse du COM (V_X_com, V_Y_com, V_Z_com) ;
○ la variable globale de commande de direction de marche, consigne_direction (un nombre réel compris entre -1 et 1)

Un des éléments importants permettant la mise en oeuvre de l'invention est donc la détermination de la position et de la vitesse du COM. Ces éléments suffisent, en combinaison avec les caractéristiques physiques du robot et la prise en compte des consignes de direction et de vitesse de marche, à déterminer une nouvelle position du membre en mouvement compatible avec l'équilibre dynamique du robot, sans prise en compte de l'historique de la trajectoire ni de son déroulement futur. Il s'agit donc de caractéristiques instantanées qui ne nécessitent pas de calculs complexes de trajectoire. L'équilibre dynamique du robot est compatible de surfaces de progression normalement accidentées, la nature des accidents gérables dépendant pour une grande partie de la précision des mesures de position et de vitesse du COM. Ladite précision peut être assurée par les moyens indiqués plus loin dans la description.

Les vecteurs et autres coordonnées sont exprimées dans le repère du pied d'appui : repère orthonormé de centre 408, d'axes 400, 401 et 402.

En sortie de ce module on récupère les variables référencées 1012 :
(X_pied_suivant, Y_pied_suivant, Z_pied_suivant) et la variable direction_pied_suivant : Dir_pied_suiv

On définit les paramètres suivants, dont les valeurs numériques correspondent à des exemples de conditions de fonctionnement de l'invention, sans que ces conditions puissent être considérées comme limitatives :
○ I_pied : longueur du pied ;
○ I_jambe : longueur de la jambe ;
○ Ky = -0.5
○ Kx = 0.25
○ Kvx = 0.0175*V_X_com
○ Kvy = 3*V_Y_com/norme(V_com)
○ Y_offset est la demi largeur signée du bassin : Y_offset>0 quand la jambe d'appui est la jambe gauche, Y_offset<0 quand la jambe d'appui est la jambe droite.
○ angle_pied_max = π/4

Les calculs permettant de déterminer X_pied_suivant et Y_pied_suivant sont alors:
X_pied_suivant = X_com + I_pied +(Kx+Kvx)*I_jambe
Y_pied_suivant = Y_com + min(Ky*Y_offset +(Kvy-consigne_direction)*abs(Y_offset), -0.1*abs(Y_offset)) si on est sur le pied gauche
Y_pied_suivant = Y_com + max(Ky*Y_offset +(Kvy - consigne_direction)*abs(Y_offset), 0.1*abs(Y_offset)) si on est sur le pied droit

Le but du min / max, suivant le pied, est d'éviter de poser le pied de l'autre coté du centre du bassin, par rapport à la hanche.

On a par ailleurs :
Z_pied_suivant = 0.0 ;
Dir_pied_suiv = arcsin(V_Y_com/norme(V_com)) +consigne_direction*angle_pied_max

En fait, comme le sol n'est pas connu, le contact a lieu à un moment qui n'est pas précisément déterminé, donc pas au X_pied_suivant et Y_pied_suivant déterminés par les calculs, mais dans le voisinage proche de ce point (si le sol est dans une configuration non planaire mais raisonnable)..
- Module « Calcul direction torse » :
   Le calcul de la direction du torse est aussi le calcul de la direction du bassin en fonction de la direction de marche.

Les vecteurs et autres coordonnées sont exprimées dans le repère du pied d'appui : repère orthonormé de centre 408, d'axes 400, 401 et 402.

La fonction prend en entrée la variables globale de commande de direction de marche = consigne_direction (1 nombre réel compris entre -1 et 1)

Soit l'angle dir_thorax = l'angle numéroté 410 fig.4

On peut par exemple choisir une consigne d'orientation du bassin telle que, en fin de phase de simple support, angle_dir_thorax = Dir_pied_suiv/2, ce qui revient à imposer que, en sortie de pas, le bassin soit tourné vers le pied suivant, du demi-angle entre les pieds, ce qui correspond à une progression « naturelle »

Pour appliquer la consigne, différentes possibilités existent, par exemple :
V_consigne_rot_bassin = consigne_direction*V_rot_max_bassin -
V_consigne*coef* angle dir_thorax(mesuré au moment du début du pas).
Avec, si V_rot_bassin différent de V_consigne_rot_bassin, alors Acc_rot_bassin = Acc_max_rot_bassin

Le résultat peut également être atteint en fixant une consigne sur l'erreur de l'angle du bassin :
Erreur_angle_bassin = Dir_pied_suiv /2 -angle dir_thorax
V_consigne_rot_bassin = Kp* Erreur_angle_bassin
Erreur_vrot_bassin = V_consigne_rot_bassin - V_rot_bassin
Acc_rot_bassin = Kv* Erreur_vrot_bassin

Il est également nécessaire de déterminer si l'application d'une commande doit se faire en couple ou en position. Par exemple, en règle générale, la commande d'un genou en position n'est préférée à la commande en couple que dans la position de simple support (une jambe en support, l'autre libre) de manière à pouvoir garder la jambe tendue.

Ainsi, tous les paramètres de commande des cartes moteurs nécessaires à la marche sont déterminés.

Le système de commande de la marche d'un robot mobile de l'invention peut être implanté dans un robot humanoïde ayant deux membres inférieurs articulés, chaque membre étant doté d'un certain nombre de degrés de liberté. Avantageusement, le robot sera commandé par une architecture à trois niveaux, ayant deux processeurs, l'un pour élaborer les commandes de haut niveau, éventuellement transmises par un lien de communication avec un serveur et l'autre étant dédié à la traduction et à la transmission aux cartes de contrôle des moteurs des articulations des commandes de haut niveau. Le premier processeur peut être une unité centrale de type PC. Le deuxième processeur peut être un processeur à jeu d'instructions réduit (RISC), par exemple de marque ARM™. La cadence d'horloge de ce deuxième processeur doit être choisie de manière à être compatible avec la vitesse de marche souhaitée. En particulier, pour une marche ressemblant à celle d'un humain, une horloge permettant d'élaborer des instructions selon une périodicité de quelques millisecondes sera avantageusement choisie. Le bus et le protocole de communication doivent également être compatibles de cet objectif de vitesse de marche. La vitesse de marche d'un robot humanoïde dans lequel est mis en oeuvre le procédé de l'invention dépendra également de la hauteur de ses jambes.

Comme déjà indiqué, le robot doit être doté de capteurs permettant d'asservir la direction du thorax et l'axe des hanches avec la précision de la marche souhaitée, elle-même déterminée par le caractère plus ou moins régulier de la surface de progression. Cette précision peut être donnée par une centrale inertielle de bonne qualité ou un ensemble de capteurs dont les mesures peuvent être combinées.

Les pieds du robot devront être instrumentés de manière à pouvoir permettre le lever du talon de façon stable. Ils pourront par exemple avantageusement être comme décrit par les figures 6 et 7, c'est-à-dire autorisant une rotation du pied sur sa pointe sans que cela soit limitatif de l'invention... La qualité du contrôle de la marche dépendra également du nombre de degrés de liberté des autres articulations inférieures (au minimum 2 dans la cheville, 2 dans chaque hanche plus un couplé dans le bassin (avantageusement un 3^{ème} degré de liberté dans chaque hanche) et, avantageusement, de la possibilité soit de les commander en couple soit de les débrayer pendant les phases libres.

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Procédé de contrôle de la marche d'un robot apte à se déplacer sur au moins deux membres sur une surface de progression, ledit procédé comprenant, pour chaque pas, au moins une première étape de mouvement de chacune des hanches sur une trajectoire sensiblement sphérique (200, 200' ; 200", 200"') centrée sur l'extrémité en appui au sol (210 ; 210') du membre rattaché à ladite hanche et une deuxième étape de mouvement de la dite extrémité vers un nouveau point d'appui, ledit procédé étant **caractérisé en ce qu'**il comprend en outre une étape de calcul d'une position du nouveau point d'appui de ladite extrémité sur la surface de progression en fonction de la vitesse du centre de masse du robot.

2. Procédé de contrôle selon la revendication 1 **caractérisé en ce qu'**il comprend en outre une autre étape intermédiaire entre lesdites première et deuxième étape au cours de laquelle l'élongation entre l'extrémité du membre en appui au sol et la dite hanche (210, 200') est augmentée d'une valeur telle que le segment (200', 200") joignant la position de ladite hanche en fin d'une trajectoire sphérique à la position de la deuxième hanche en début de la trajectoire sphérique suivante est sensiblement parallèle à la surface de progression.

3. Procédé de contrôle selon la revendication 1 **caractérisé en ce que** l'axe du thorax du robot est asservi pour rester dans un angle sensiblement constant avec la verticale.

4. Procédé de contrôle selon la revendication 1 **caractérisé en ce que** l'axe des hanches est asservi en fonction de la direction de la marche.

5. Procédé de contrôle selon la revendication 1 **caractérisé en ce que** l'augmentation de l'élongation entre l'extrémité du membre en appui au sol et la dite hanche (210, 200') est procurée par une impulsion de ladite extrémité sur le sol déclenchée par une commande en pitch d'une articulation de cheville prévue dans ledit membre.

6. Procédé de contrôle selon la revendication 1 **caractérisé en ce que** l'augmentation de l'élongation entre l'extrémité du membre en appui au sol et la dite hanche (210, 200') est procurée par une impulsion de ladite extrémité sur le sol déclenchée par une commande de l'articulation du genou.

7. Procédé de contrôle selon la revendication 1 **caractérisé en ce que** l'augmentation de l'élongation entre l'extrémité du membre en appui au sol et la dite hanche (210, 200') est procurée par une impulsion de ladite extrémité sur le sol déclenchée par une commande d'un vérin dans la jambe, parallèle à cette dernière.

8. Procédé de contrôle selon l'une des revendications 5, 6 ou 7 **caractérisé en ce que** les impulsions du talon sont déclenchées lorsque la direction de la jambe a un angle par rapport à la verticale supérieur à un angle limite dépendant de la vitesse du COM et d'une consigne de vitesse de la marche.

9. Procédé de contrôle selon l'une des revendications 5, 6 ou 7 **caractérisé en ce que** l'articulation motorisée permettant l'impulsion est commandée par une rampe de vitesse fonction de l'accélération limite du moteur et du rapport de la vitesse du centre de masse à la consigne de vitesse de marche.

10. Procédé de contrôle selon la revendication 1 **caractérisé en ce que** la course du pied dans la direction de la marche dépend de variables choisies dans le groupe comprenant la position du centre de masse dans la même direction, la longueur du membre, la longueur du pied et la vitesse du centre de masse dans la direction de marche.

11. Procédé de contrôle selon la revendications 1 **caractérisé en ce que** la course du pied perpendiculaire à la direction de la marche dépend de variables choisies dans le groupe comprenant la position du centre de masse dans la même direction, la consigne de direction de marche, la largeur de hanche, la vitesse dans la direction perpendiculaire à la direction de marche et la consigne de vitesse de marche.

12. Procédé de contrôle selon l'une des revendications 5, 6 ou 7 **caractérisé en ce qu'**au moins un membre est apte à être commandé pour réaliser un mouvement de décélération avant que son extrémité ne touche la surface de progression.

13. Robot apte à se déplacer sur une surface de progression sur au moins deux membres, ledit robot comprenant au moins un module apte à générer pour chaque pas un mouvement de chacune des hanches sur une trajectoire sensiblement sphérique (200, 200' ; 200", 200"') centrée sur l'extrémité en appui au sol (210 ; 210') du membre rattaché à ladite hanche et un module apte à générer un mouvement de la dite extrémité vers un nouveau point d'appui, ledit robot étant **caractérisé en ce qu'**il comprend en outre un module pour calculer une position du nouveau point d'appui de ladite extrémité sur la surface de progression en fonction de la vitesse du centre de masse du robot.

14. Robot selon la revendication 13 **caractérisé en ce qu'**au moins un des membres comporte un vérin dont l'axe est parallèle à l'axe dudit membre.

15. Robot selon la revendication 13 **caractérisé en ce qu'**au moins une extrémité d'un desdits membres comporte un pied comprenant au moins deux articulations en pivot d'axes sensiblement parallèles entre eux, et sensiblement perpendiculaires à la direction du pied, l'une proche de l'extrémité avant du pied et l'autre proche du talon.

16. Robot selon la revendication 13 **caractérisé en ce qu'**au moins une extrémité d'un desdits membres comporte un pied dont l'extrémité avant comprend un arrondi dont la forme est prévue pour déclencher un levé de talon lorsque l'extrémité avant du pied pivote vers l'avant.

17. Robot selon la revendication 13 **caractérisé en ce qu'**il comprend en outre un ensemble de capteurs inertiels permettant de conserver sensiblement constante l'orientation d'un repère lié à une partie du robot par rapport à un repère extérieur fixe.

18. Robot selon la revendication 13 **caractérisé en ce qu'**il comprend en outre un ensemble de capteurs inertiels permettant de mesurer avec précision les accélérations et les vitesses, linéaires et angulaires, du thorax ou de la tête, permettant d'en déduire la vitesse vectorielle du centre de gravité.

## Claims

1. A method for controlling the walking motion of a robot that is designed to move on at least two limbs on a progression surface, said method comprising, for each walking step, at least one first step of moving each of the hips over a substantially spherical trajectory (200, 200'; 200", 200"') centred on the end bearing on the ground (210; 210') of the limb attached to said hip, and a second step of moving said end to a new bearing point, said method being **characterised in that** it further comprises a step of calculating a position of the new bearing point of said end on the progression surface as a function of the speed of the centre of mass of said robot.

2. The control method of claim 1, wherein it further comprises another intermediate step between said first and second steps, during which the elongation between the end of the limb bearing on the ground and said hip (210, 200') is increased by a value such that the segment (200', 200") joining the position of said hip at the end of a spherical trajectory to the position of the second hip at the start of the next spherical trajectory is substantially parallel to the progression surface.

3. The control method of claim 1, wherein the axis of the thorax of the robot is servo-controlled so as to remain within an angle that is substantially constant with the vertical.

4. The control method of claim 1, **characterised in that** the axis of the hips is servo-controlled as a function of the direction of walking.

5. The control method of claim 1, wherein the increase in the elongation between the end of the limb bearing on the ground and said hip (210, 200') is achieved by an impulse of said end on the ground that is triggered by a pitch command of an ankle articulation that is provided in said limb.

6. The control method of claim 1, wherein the increase in the elongation between the end of the limb bearing on the ground and said hip (210, 200') is procured by an impulse of said end on the ground that is triggered by a command of the articulation of the knee.

7. The control method of claim 1, wherein the increase in the elongation between the end of the limb bearing on the ground and said hip (210, 200') is procured by an impulse of said end on the ground that is triggered by a command of a cylinder in the leg that is parallel thereto.

8. The control method of one of claims 5, 6 or 7, wherein the impulses of the heel are triggered when the direction of the leg has an angle relative to the vertical that is greater than a limit angle that depends on the speed of the COM and a walking speed setpoint.

9. The control method of one of claims 5, 6 or 7, wherein the motorised articulation that allows the impulse is controlled by a speed ramp as a function of the maximum acceleration of the motor and of the ratio of the centre of mass speed to the walking speed setpoint.

10. The control method of claim 1, wherein the course of the foot in the walking direction depends on variables that are selected from the group comprising the position of the centre of mass in the same direction, the length of the limb, the length of the foot and the speed of the centre of mass in the walking direction.

11. The control method of claim 1, wherein the course of the foot perpendicular to the walking direction depends on variables that are selected from the group comprising the position of the centre of mass in the same direction, the walking direction setpoint, the hip width, the speed in the direction that is perpendicular to the walking direction and the walking speed setpoint.

12. The control method of one of claims 5, 6 or 7, wherein at least one limb is designed to be controlled to carry out a deceleration movement before its end touches the progression surface.

13. A robot that is designed to move on a progression surface on at least two limbs, said robot comprising at least one module that is designed to generate a movement of each of the hips for each walking step on a substantially spherical trajectory (200, 200'; 200", 200"') centred on the end bearing on the ground (210; 210') of the limb attached to said hip , and a module that is designed to generate a movement of said end to a new bearing point, said robot being **characterised in that** it further comprises a module for calculating a position of the new bearing point of said end on the progression surface as a function of the speed of the centre of mass of the robot.

14. The robot of claim 13, wherein at least one of the limbs comprises a cylinder, the axis of which is parallel to the axis of said limb.

15. The robot of claim 13, wherein at least one end of one of said limbs comprises a foot comprising at least two pivoting articulations with axes that are substantially parallel to each other and substantially perpendicular to the direction of the foot, one near to the front end of the foot and the other near the heel.

16. The robot of claim 13, wherein at least one end of one of said limbs comprises a foot, the front end of which comprises a rounding, the form of which is designed to trigger a lifting of the heel when the front end of the foot pivots forward.

17. The robot of claim 13, further comprising a set of inertial sensors that allow the orientation of a coordinate system associated with part of the robot to remain substantially constant relative to a fixed external coordinate system.

18. The robot of claim 13, further comprising a set of inertial sensors that allow precise measuring of the accelerations and the line and angular speeds of the thorax or the head, allowing the vectoral speed of the centre of gravity to be deduced therefrom.

## Patentansprüche

1. Verfahren zum Steuern des Gehens eines Roboters, der sich auf wenigstens zwei Gliedmaßen über eine Fortbewegungsfläche bewegen kann, wobei das Verfahren für jeden Gehschritt wenigstens einen ersten Schritt des Bewegens jeder der Hüften über eine im Wesentlichen sphärische Bahn (200, 200'; 200", 200"'), die an dem sich am Boden (210; 210') abstützenden Ende der an der Hüfte angebrachten Gliedmaße zentriert ist, und einen zweiten Schritt des Bewegens des Endes zu einem neuen Abstützpunkt beinhaltet, wobei das Verfahren **dadurch gekennzeichnet ist, dass** es ferner einen Schritt des Berechnens einer Position des neuen Abstützpunkts des Endes auf der Fortbewegungsfläche in Abhängigkeit von der Geschwindigkeit des Massenmittelpunkts des Roboters beinhaltet.

2. Steuerverfahren nach Anspruch 1, wobei es ferner einen anderen Zwischenschritt zwischen dem ersten und dem zweiten Schritt beinhaltet, bei dem die Dehnung zwischen dem Ende der sich auf dem Boden abstützenden Gliedmaße und der Hüfte (210, 200') um einen solchen Wert erhöht wird, dass das Segment (200', 200"), das die Position der Hüfte am Ende einer sphärischen Bahn mit der Position der zweiten Hüfte am Anfang der nächsten sphärischen Bahn verbindet, im Wesentlichen parallel zur Fortbewegungsfläche ist.

3. Steuerverfahren nach Anspruch 1, wobei die Achse des Thorax des Roboters servogesteuert wird, so dass sie in einem Winkel bleibt, der im Wesentlichen konstant mit der Vertikalen ist.

4. Steuerverfahren nach Anspruch 1, **dadurch gekennzeichnet, dass** die Achse der Hüften in Abhängigkeit von der Gehrichtung servogesteuert wird.

5. Steuerverfahren nach Anspruch 1, wobei die Zunahme der Dehnung zwischen dem Ende der sich auf dem Boden abstützenden Gliedmaße und der Hüfte (210, 200') durch einen Impuls des Endes am Boden erzielt wird, der durch einen Pitch-Befehl eines in der Gliedmaße vorgesehenen Knöchelgelenks ausgelöst wird.

6. Steuerverfahren nach Anspruch 1, wobei die Zunahme der Dehnung zwischen dem Ende der sich am Boden abstützenden Gliedmaße und der Hüfte (210, 200') durch einen Impuls des Endes am Boden erzielt wird, der durch einen Befehl des Kniegelenks ausgelöst wird.

7. Steuerverfahren nach Anspruch 1, wobei die Zunahme der Dehnung zwischen dem Ende der sich am Boden abstützenden Gliedmaße und der Hüfte (210, 200') durch einen Impuls des Endes am Boden erzielt wird, der durch einen Befehl eines Zylinders in dem Bein ausgelöst wird, der parallel zu Letzterem ist.

8. Steuerverfahren nach Anspruch 5, 6 oder 7, wobei die Impulse der Ferse ausgelöst werden, wenn die Richtung des Beins einen Winkel zur Vertikalen hat, der größer ist als ein Grenzwinkel, der von der Geschwindigkeit des COM und einem Gehgeschwindigkeits-Sollwert abhängig ist.

9. Steuerverfahren nach Anspruch 5, 6 oder 7, wobei das den Impuls zulassende motorisierte Gelenk durch eine Geschwindigkeitsrampe in Abhängigkeit von der Höchstbeschleunigung des Motors und von dem Verhältnis der Geschwindigkeit des Massenmittelpunkts zu dem Gehgeschwindigkeits-Sollwert gesteuert wird.

10. Steuerverfahren nach Anspruch 1, wobei der Weg des Fußes in Gehrichtung von Variablen abhängt, die aus der Gruppe bestehend aus der Position des Massenmittelpunkts in derselben Richung, der Länge der Gliedmaße, der Länge des Fußes und der Geschwindigkeit des Massenmittelpunkts in Gehrichtung ausgewählt werden.

11. Steuerverfahren nach Anspruch 1, wobei der Weg des Fußes lotrecht zur Gehrichtung von Variablen abhängt, die aus der Gruppe bestehend aus der Position des Massenmittelpunkts in derselben Richtung, dem Gehrichtungs-Sollwert, der Hüftbreite, der Geschwindigkeit in der Richtung lotrecht zur Gehrichtung und dem Gehgeschwindigkeits-Sollwert ausgewählt werden.

12. Steuerverfahren nach Anspruch 5, 6 oder 7, wobei wenigstens eine Gliedmaße so ausgelegt ist, dass sie zum Realisieren einer Verlangsamungsbewegung gesteuert wird, bevor ihr Ende die Fortbewegungsfläche berührt.

13. Roboter, der sich auf wenigstens zwei Gliedmaßen über eine Fortbewegungsfläche bewegen kann, wobei der Roboter wenigstens ein Modul, das für jeden Gehschritt eine Bewegung jeder der Hüften auf einer im Wesentlichen sphärischen Bahn (200, 200'; 200", 200"') erzeugen kann, die an dem sich am Boden (210; 210') abstützenden Ende der an der Hüfte angebrachten Gliedmaße zentriert ist, und ein Modul umfasst, das so ausgelegt ist, dass es eine Bewegung des Endes zu einem neuen Abstützpunkt erzeugt, wobei der Roboter **dadurch gekennzeichnet** ist, das er ferner ein Modul zum Berechnen einer Position des nächsen Abstützpunkts des Endes auf der Fortbewegungsfläche in Abhängigkeit von der Geschwindigkeit des Massenmittelpunkts des Roboters beinhaltet.

14. Roboter nach Anspruch 13, wobei wenigstens eine der Gliedmaßen einen Zylinder umfasst, dessen Achse parallel zur Achse der Gliedmaße ist.

15. Roboter nach Anspruch 13, wobei wenigstens ein Ende von einer der Gliedmaßen einen Fuß aufweist, der wenigstens zwei Schwenkgelenke mit Achsen umfasst, die im Wesentlichen parallel zueinander und im Wesentlichen lotrecht zur Richtung des Fußes sind, eine in der Nähe des vorderen Endes des Fußes und die andere in der Nähe der Ferse.

16. Roboter nach Anspruch 13, wobei wenigstens ein Ende einer der Gliedmaßen einen Fuß umfasst, dessen vorderes Ende eine Rundung aufweist, deren Form so ausgelegt ist, dass sie ein Heben der Ferse auslöst, wenn das vordere Ende des Fußes nach vorne schwenkt.

17. Roboter nach Anspruch 13, ferner umfassend einen Satz von Trägheitssensoren, die es lassen, die Orientierung eines mit einem Teil des Roboters assoziierten Koordinatensystems relativ zu einem festen externen Koordinatensystem im Wesentlichen konstant zu halten.

18. Roboter nach Anspruch 13, ferner umfassend einen Satz von Trägheitssensoren aufweist, die eine präzise Messung der Beschleunigungen sowie der Linear- und Winkelgeschwindigkeiten von Thorax und Kopf zulassen, so dass die Vektorgeschwindigkeit des Massenmittelpunkts davon abgeleitet werden kann.
